# EUROPEAN PATENT APPLICATION

(11) **EP 3 907 745 A1**
(43) Date of publication of application: **10.11.2021**
(21) Application number: 20173537.0
(22) Date of filing: 07.05.2020
(51) Int. Cl.: H01B 13/14, H01B 13/06, H02K 3/30, H01B 13/16

(54) **SIMULTANEOUS STRAND, TURN AND GROUNDWALL ELECTRICAL INSULATION OF HIGH VOLTAGE MULTI-STRAND CONDUCTOR BARS**

(71) Applicant: ABB Schweiz AG, 5400 Baden (CH)
(72) Inventor: Leal-Ayala, Andres, 5408 Ennetbaden (CH); Binder, Joel Fabien Rupert, 5300 Turgi (CH); Gautschi, Simon, 5408 Ennetbaden (CH)
(74) Representative: Zimmermann & Partner Patentanwälte mbB

(57) **Abstract**

An apparatus and a method for applying insulation material onto a conductor are disclosed. An apparatus (100, 200) for applying an insulation layer (20) onto a conductor (15-1, 15-2, 15-3, 15-4) to obtain a conductor arrangement (10) for an electrical appliance is provided, the apparatus comprising: a treatment device (110, 120, 130; 210, 220, 230) having at least an application unit (110, 210) and a curing unit (120, 220), the curing unit (120, 220) being arranged downstream of the application unit (110, 210); an advancement device (150) configured to perform a relative movement of the conductor (15-1, 15-2, 15-3, 15-4) with respect to the treatment device (110, 120, 130; 210, 220, 230) in an advancement direction (A), wherein the application unit (110, 210) is configured to apply a composition of a thermosetting material and solid electrically insulating elements, preferably mica platelets, onto the conductor (15-1, 15-2, 15-3, 15-4) by forming a pool (300) of the composition having a substantially constant pressure that provides a homogeneous liquid composition (330) around the conductor, and wherein the curing unit (120, 220) is configured to activate a curing process of the thermosetting material to obtain the insulation layer (20) on the conductor (15-1, 15-2, 15-3, 15-4).

## Description

### TECHNICAL FIELD

Embodiments of the present disclosure relate generally to an apparatus and a method for applying insulation material onto a conductor, such as a coil wire or a Roebel bar, to obtain an insulated conductor arrangement for an electrical appliance.

### BACKGROUND ART

Electrical conductors, such as coil wires or Roebel bars for a rotary electric machine such as a motor or a generator, have to be insulated on an outer surface thereof in order to avoid an electrical contact between single adjacent conductors, such as adjacent windings of a coil form-wound coil. The insulation also serves the purpose to avoid a short circuit between the conductor in the electric machine and other conductive components, e. g. the stator of the electric machine.

Currently, there are technologies known for insulating a conductor, e. g. of a form-wound coil or Roebel bars, in high-voltage electric machines. For example, in a conventional technology, a thermoset resin material is combined with a tape containing mica (a mica tape). In a so-called Resin Rich process (RR), a pre-impregnated resin rich mica tape is used. The resin is pre-polymerized. Then, the tape is wrapped around the conductor and consolidated in a hot-press. In a so-called Vacuum Pressure Impregnation process (VPI), a porous mica tape is first wrapped around the conductor; then, it is impregnated with a low viscous resin. Subsequently, the arrangement is heat-cured, and the resin solidifies. In the case of small machines (for voltages less than 15 kV), complete stators with inserted conductors (form-wound coils) are fully impregnated in a global VPI process. For large machines, insulated Roebel bars are manufactured and impregnated individually in a single VPI process.

A combination of mica tape and resin impregnation has been in use for almost a century. Although robotic applications have been developed to automate the coil forming and insulation taping, performing a conductor insulation, in particular a stator coil insulation, is still a time-consuming process involving multiple steps.

The mica tapes have to be precisely positioned to avoid thickness variations in the form of tape gaps or overlapping tape parts. Moreover, the principle of mica tape impregnation bears the risk of void formation in the tape resin structure. Voids may lead to partial discharge problems, leading to a limitation of the design field.

Moreover, handling of liquid resins in the workshops - usually epoxy-anhydride and polyester resin systems - causes health and safety issues, as well as environmental issues, due to the evaporation of chemical fumes and gases from the large VPI tanks. Curing the impregnated parts is time consuming and energy consuming. For example, it may take several hours of heating in large ovens, while the chemical fumes have to be eliminated.

Thus, there is a desire for a simple means to obtain a properly insulated conductor arrangement for an electrical appliance.

### SUMMARY

According to an aspect an apparatus for applying an insulation layer onto a conductor to obtain a conductor arrangement for an electrical appliance is provided, the apparatus comprising: a treatment device having at least an application unit and a curing unit, the curing unit being arranged downstream of the application unit; an advancement device configured to perform a relative movement of the conductor with respect to the treatment device in an advancement direction, wherein the application unit is configured to apply a composition of a thermosetting material and solid electrically insulating elements, preferably mica platelets, onto the conductor by forming a pool of the composition having a substantially constant pressure that provides a homogeneous liquid composition around the conductor, and wherein the curing unit is configured to activate a curing process of the thermosetting material to obtain the insulation layer on the conductor.

According to a further aspect a method for applying an insulation layer onto a conductor to obtain a conductor arrangement for an electrical appliance is provided, the method comprising: applying continuously in a longitudinal direction of the conductor a composition of a thermosetting material and solid electrically insulating elements, preferably mica platelets, onto the conductor by forming a pool of the composition having a substantially constant pressure that provides a homogeneous liquid composition around the conductor, and
activating continuously in the longitudinal direction a curing process of the applied thermosetting material to obtain the insulation layer on the conductor.

### BRIEF DESCRIPTION OF THE DRAWINGS

Embodiments of the subject-matter of the present application will be described in more detail below with reference to the drawings, in which:
Fig. 1 is a schematic sectional view of a conductor arrangement obtainable through the technology according to embodiments described herein;
Fig. 2 is an enlarged schematic sectional view of a detail of the conductor arrangement of Fig. 1;
Fig. 3 is a schematic perspective view illustrating an apparatus according to an embodiment;
Fig. 3A illustrates a detail of an apparatus according to an embodiment.
Fig. 4 is a schematic side view illustrating an apparatus according to another embodiment;
Fig. 5 is a schematic sectional front view of the apparatus of Fig. 4; and
Fig. 6 is a flow chart of a method according to an embodiment.

### DESCRIPTION OF EMBODIMENTS

In the following, embodiments of the present application are described with reference to the drawings. In the drawings, like parts are provided with the same reference numerals, and their respective descriptions may be abbreviated or omitted as appropriate.

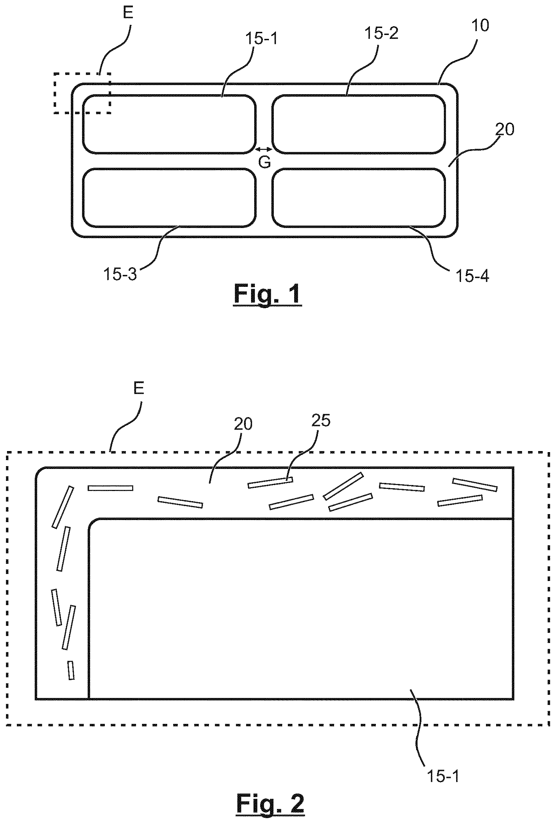

Fig. 1 is a schematic sectional view of a conductor arrangement 10. The conductor arrangement 10 is obtained or obtainable through a method according to an embodiment as described herein, preferably by performing a method by means of an apparatus according to an embodiment as described herein. Fig. 2 shows, in an enlarged view, a part E of the conductor arrangement 10 of Fig. 1. Figs. 1 and 2 are described in common.

In Fig. 1, the conductor arrangement 10 comprises spatially adjacent conductors 15-1, 15-2, 15-3, 15-4, each having a substantially rectangular cross-section with rounded corners. However, neither the cross-sectional shape, nor the number of conductors 15-1, 15-2, 15-3, 15-4 is limited to those shown in the drawings.

For example, only one conductor may be provided to be insulated by an apparatus or method according to an embodiment, or two, three, five or more conductors are provided in a conductor arrangement. Still for example, one or more of the conductors may have different cross-sectional shapes, such as square, square with rounded corners, rectangular, circular etc. In the example of Figs. 1 and 2, each of the conductors 15-1, 15-2, 15-3, 15-4 are enameled conductors, but not limited thereto.

In Figs. 1 and 2, the conductors 15-1, 15-2, 15-3, 15-4 each have outer surfaces that are arranged at a distance of a gap G with respect to the respective neighboring conductors 15-1, 15-2, 15-3, 15-4. The gap G distance may be provided intentionally or non-intentionally, and it may be as small as only a few millimeters or even less than one millimeter. An insulation layer 20 is present on the conductor arrangement and in the gap G.

The insulation layer 20 comprises an insulation material obtained through a curing process of a thermosetting material to be described later, wherein solid electrically insulating elements 25, such as mica platelets, are present inside the thermoset material. Preferably, the relationship of the solid insulating elements to the thermosetting material component of the insulation material is between 20:80, preferably between 25:75 and typically about 30:70 by volume in the uncured state.

The term composition, as used herein, generally refers to a mixture or a compound of the materials that are involved. Particularly, a composition of a thermosetting material and mica elements may be obtained by mixing the uncured thermosetting material and the insulating elements in an appropriate manner. For example, the thermosetting material and mica platelets are fed, typically gravimetrically fed, into a mixer that produces the composition. The composition may generally be a mica-filled liquid resin compound. The thermosetting material may be an UV-curable thermosetting resin. The insulating elements may be mica particles, typically mica platelets, having a predetermined average particle size. The insulation material, or the thermosetting material component thereof, is typically cured according to need.

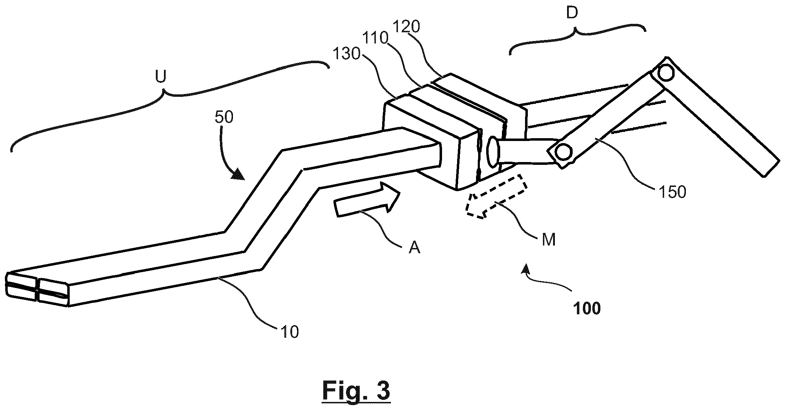

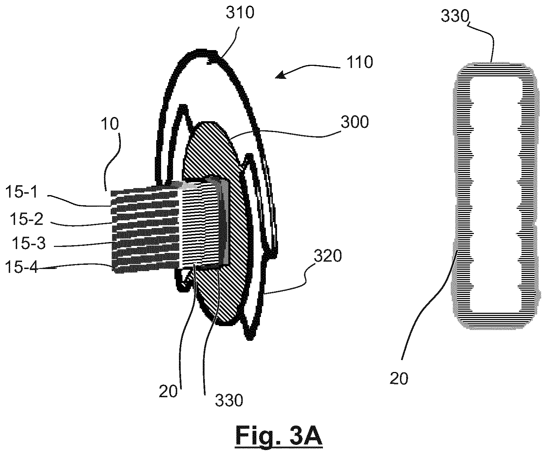

Fig. 3 shows a schematic perspective view illustrating an apparatus 100 according to an embodiment. The apparatus 100 is used for applying the insulation layer 10 onto the conductor 15-1, 15-2, 15-3, 15-4 to obtain a conductor arrangement 10, for example the conductor arrangement 10 shown in Figs. 1 and 2. The conductor arrangement 10 can be used as a part of an electric machine.

For example, the electric machine may be part, but not limited to, a stator of a rotary electric machine. An electric machine is typically a rotary electric machine, and the conductor arrangement 10 is preferably used in a rotor or in a stator of the rotary electrical machine. The apparatus 100 may be used to apply the insulation layer 10 onto the conductor 15-1, 15-2, 15-3, 15-4 as described herein, to obtain the conductor arrangement 10.

In Fig. 3, an application unit 110, a curing unit 120 and a cleaning unit 130 form a treatment device. In other embodiments, the cleaning unit 130 may be omitted, and the treatment device may be formed of only the application unit 110 and the curing unit 120. The application unit 110, the curing unit 120, and, if provided, the cleaning unit 130 are arranged such as to be spatially adjacent to one another, i. e. neighboring each other. Preferably, the application unit 110, the curing unit 120, and, if provided, the cleaning unit 130 form a common unit.

The conductor 15-1, 15-2, 15-3, 15-4 is passed through the treatment device 110, 120, 130 in order to obtain the insulation layer 20 on the conductor 15-1, 15-2, 15-3, 15-4, as described later. In the embodiment shown in Fig. 3, a relative movement of the treatment device 110, 120, 130 with respect to the conductor 15-1, 15-2, 15-3, 15-4 is achieved by moving the treatment device 110, 120, 130, while the conductor 15-1, 15-2, 15-3, 15-4 is held stationary or fixed. The treatment device 110, 120, 130 is mounted, e. g. hinged, on an automatically moving robotic unit 150, whereof a robotic arm is shown in Fig. 3. In Fig. 3, the automatically moving robotic unit 150 forms an advancement device, or treatment device moving unit, for performing the relative movement of the conductor 15-1, 15-2, 15-3, 15-4 with respect to the treatment device.

The automatically moving robotic unit 150 is moved along the conductor 15-1, 15-2, 15-3, 15-4 in the movement direction M indicated with a dashed arrow in Fig. 3. Thereby, with the conductor 15-1, 15-2, 15-3, 15-4 being held fixed, the conductor 15-1, 15-2, 15-3, 15-4 can be regarded as being advanced (relatively spoken) in the advancement direction A shown with a solid-line arrow A in Fig. 3. With the automatically moving robotic unit 150 of Fig. 3 forming the advancement device, a complex-shaped conductor 15-1, 15-2, 15-3, 15-4 can be provided with the insulation layer 20. An example of a complex-shaped conductor is the conductor 15-1, 15-2, 15-3, 15-4 of Fig. 3 that does not extend entirely straight in the longitudinal direction, but comprises a bend 50 where its longitudinal elongation deviates from a straight line. The treatment device 110, 120, 130 is guided along the bended 50 part of the conductor 15-1, 15-2, 15-3, 15-4 by means of the automatically moving robotic unit 150.

In yet other embodiments the treatment device 110, 120, 130 may be substantially fixed with respect to the earth and/or the laboratory and the conductor 15-1, 15-2, 15-3, 15-4 may be moved.Fig. 3A illustrates a detail of an apparatus according to an embodiment. The application unit 110 may include one or more conductors 320 for the composition, e.g. the liquid resin compound with mica platelets. The composition is introduced through an inlet 310 and flows through the one or more conductors 320 into a space where a pool 300 of the composition is formed. The pool 300 may be for example a pool of a liquid resin composition containing mica platelets.

The pool 300 is characterized by a substantially constant pressure of the liquid resin composition that then surrounds the conductor 15-1, 15-2, 15-3, 15-4 substantially uniformly in order to form a homogeneous liquid 330 around the conductor. The liquid 330 is then cured by the curing unit 120, for example with ultraviolet (UV) light in order to form the insulation layer 20 of the conductor arrangement 10. The curing unit is not shown in Fig. 3A.

Fig. 3A also illustrates that the liquid 330 uniformly surrounds the conductor, uniformly filling gaps between adjacent conductor strands of the conductor.

The liquid 330, e.g. the resin compound with mica platelets, is therefore substantially homogenous around the conductor 15-1, 15-2, 15-3, 15-4 and/or in gaps between conductor strands of the conductor in consequence of the substantially constant pressure in the pool 300.

After curing, the liquid 330 forms a substantially homogeneous insulation layer 20 on the conductor and/or between conductor strands of the conductor.

The application unit 110 applies the composition generating a pool 300 of the composition around the metallic conductors 15-1, 15-2, 15-3, 15-4. By producing such a pool 300 of the composition, a very uniform pressure all around the metallic conductors is obtained, enabling the formation of a very uniform coating, since there are no pressure variations around the perimeter. This allows to achieve a very uniform thickness of the composition. The composition flows from both sides into the cavity where the pool 300 is created, avoiding the formation of any pressure gradients. For example the composition may flow through one or more conductors 320, in particular through a plurality of conductors 320, for example arranged symmetrically with respect to a vertical axis of symmetry of the conductor and/or symmetrically with respect to a vertical axis passing through an inlet 310.

The composition uniformly and homogeneously enters a space to form the substantially homogeneous pool 300 and then forms a homogeneous and uniform liquid 330 around the conductor 15-1, 15-2, 15-3, 15-4 to form a uniform insulation layer 20 after coating.

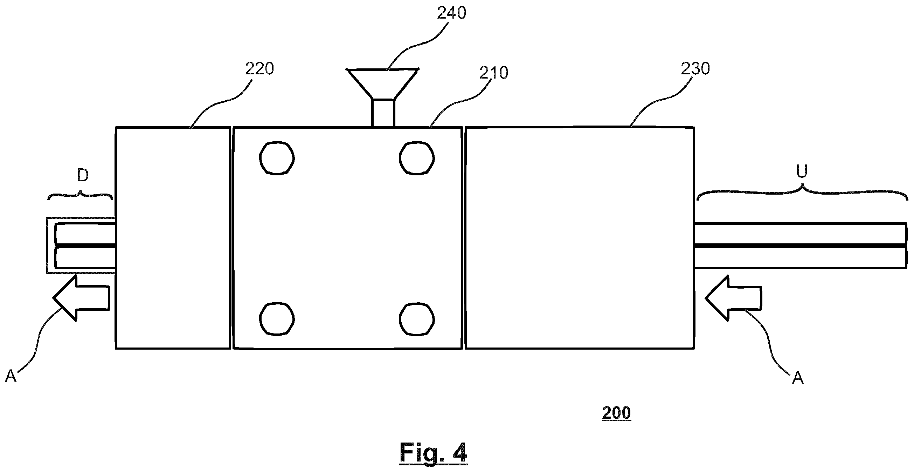

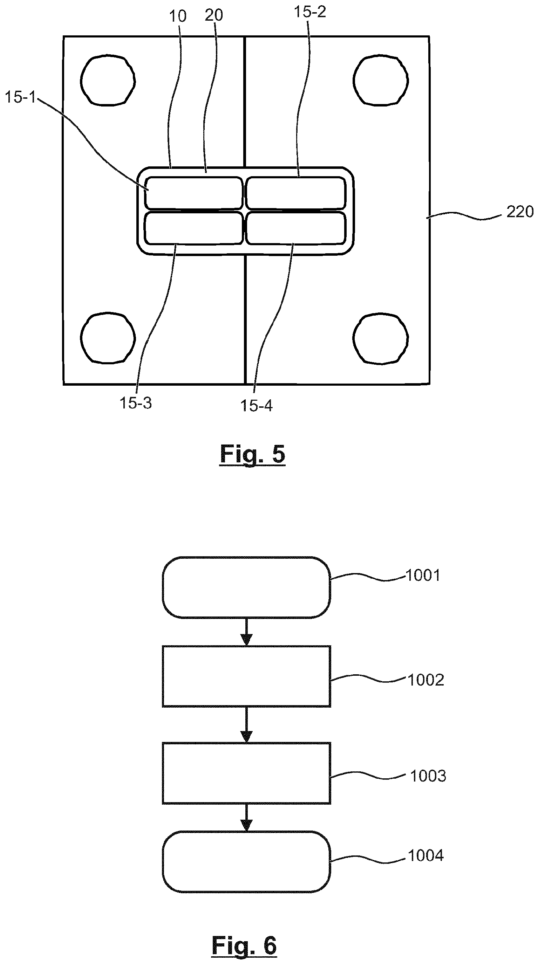

Figs. 4 and 5 show a schematic side view and a schematic front view, respectively, of an apparatus 200 according to another embodiment. In Figs. 4 and 5, the conductor 15-1, 15-2, 15-3, 15-4 is passed through the apparatus 200 in the advancement direction, indicated by a solid-line arrow A, where the apparatus 200 itself is stationary, i. e. fixed. For example, the conductor 15-1, 15-2, 15-3, 15-4 is advanced by a guidance roller or feeding roller (not shown) arranged inside the apparatus and driven by an appropriate drive, such as a motor. In the apparatus 200 of Figs. 4 and 5, such an advancing means forms a conductor feeding unit that is adapted to move the conductor 15-1, 15-2, 15-3, 15-4 in its longitudinal direction along the treatment unit.

The treatment unit in the apparatus 200, again, comprises an application unit 210, a curing unit 220, and a cleaning unit 230, wherein the cleaning unit is optional and may be omitted. In addition, in Fig. 4, a composition material feeder 240 is shown for feeding the composition material to the application unit 210.

In both embodiments, the respective curing unit 120, 220 is arranged downstream of the corresponding application unit 110, 210. When the conductor 15-1, 15-2, 15-3, 15-4 is moved in the advancement direction A, those regions of the conductor 15-1, 15-2, 15-3, 15-4 in its longitudinal direction that have already been treated, i. e. at least passed the application unit 110, 210, are referred to as being a downstream region D, and likewise, a those regions of the conductor 15-1, 15-2, 15-3, 15-4 in its longitudinal direction that still have to be treated are referred to as an upstream region U.

When the conductor 15-1, 15-2, 15-3, 15-4 is passed through the respective treatment unit 110, 120, 130 or 210, 220, 230, either by holding the conductor 15-1, 15-2, 15-3, 15-4 stationary and moving the treatment unit 110, 120, 130 or by holding the treatment unit 210, 220, 230 stationary and moving the conductor 15-1, 15-2, 15-3, 15-4, the application unit 110, 210, or jacketing unit, applies the composition of the thermosetting material and the solid electrically insulating elements onto at least parts of the conductor 15-1, 15-2, 15-3, 15-4, typically onto at least parts of the outer surface of the conductor 15-1, 15-2, 15-3, 15-4.

The composition material, e. g. a compounded resin having mica platelets mixed therein, is typically fed to the application unit 110, 210 via a metering pump (not shown). In Fig. 3, the application unit 110, applies a layer of the composition material onto the complex-shaped conductor 15-1, 15-2, 15-3, 15-4 which is held stationary by a static clamping system.

A thickness of the composition material layer applied via the application unit 110 is controllable by means of the composition throughput, measured via the metering pump, and a translational speed of the application unit 110 via the automatically moving robotic unit 150. Afterwards, the curing unit 120 activates the curing, i. e. the crosslinking of the thermoset material, as described in more detail below.

In Figs. 4 and 5, the composition material is poured into the composition material feeder 240, e. g. conical hopper, which feeds the stationary application unit 210. The conductor 15-1, 15-2, 15-3, 15-4 to be provided with the insulation layer 20 enters the application unit 210, while the segment of freshly applied or freshly jacketed conductor 15-1, 15-2, 15-3, 15-4 enters the curing unit 220, in which the curing is activated, i. e. the crosslinking of the thermoset material is activated, as described in more detail below.

The curing unit 120, 220 activates a curing process of the thermosetting material that has already been applied onto the conductor 15-1, 15-2, 15-3, 15-4. The curing process, or crosslinking process, of the thermosetting material is activated right after having been applied by means of the application unit 110, 120.

Thus, the curing unit 120, 220 is configured such as to activate the curing process for the thermosetting material. When for example the thermosetting material is UV curable, the curing unit 120, 220 includes at least one UV light source having a sufficient intensity to activate the curing process when the conductor 15-1, 15-2, 15-3, 15-4 onto which the thermosetting material has been applied is passed through the curing unit 120, 220. It is noted that the curing process need not necessarily be terminated in a part of the conductor 15-1, 15-2, 15-3, 15-4 that leaves the curing unit 120, 220. For example, it is conceivable that the thermosetting material is cured to a degree of less than 100%, e. g. 90% or 80%, when leaving the curing unit.

The thermosetting material preferably has a viscosity low enough to penetrate into the gap G between adjacent conductor parts 15-1, 15-2, 15-3, 15-4. Preferably, the thermosetting material is a free-flowing material at the temperature of application, e. g. at room temperature. Typically, in addition, the characteristics of the thermosetting material are such that it adheres on the surfaces, as well in the gap G, in a sufficient manner until cured by activation of the curing unit 120, 220, as described in the following.

The curing unit 120, 220 is arranged downstream of the application unit 110. For example, the thermosetting material is UV-curable, and the curing unit 120, 220 irradiates the UV-curable thermosetting material that has been applied onto the conductor 15-1, 15-2, 15-3, 15-4 with UV light, thus initiating the curing.

The application unit may be configured to form a pool 300 of the thermosetting material in a region that surrounds the conductor in order to obtain a constant pressure to form a uniform and homogeneous liquid 330 around the conductor and/or in the gaps between conductor strands of the conductor.

The thermosetting material is not limited to a UV-curable material, and the thermosetting material may as well be, for example, a heat-curable material. In this case, the curing unit 120, 220 heats the heat-curable thermosetting material, thereby initiating the curing. As stated above, the curing process of the thermosetting material by means of the curing unit 120, 220 need not necessarily be finished when the treated conductor 15-1, 15-2, 15-3, 15-4 parts leave the treatment device 110, 120, 130 or 210, 220, 230.

Fig. 5 shows a schematic front view of the apparatus 200 of Fig. 4, when viewed from the downstream direction D towards the upstream direction U in Fig. 4. The treated conductor 15-1, 15-2, 15-3, 15-4 parts leave the curing unit 220 as the conductor arrangement 10 having the insulation layer 20 applied thereon.

The conductor arrangement 10 that is obtained comprises the conductor 15-1, 15-2, 15-3, 15-4 including an electrically conductive material having an electrical conductivity value, such as copper or enameled copper. The insulation layer 20 obtained on the conductor arrangement is at least partially provided around the conductor 15-1, 15-2, 15-3, 15-4 with a cured insulation material as described herein. As used herein, the term "at least partially provided around the conductor" may be understood in a way that the conductor may be surrounded by the insulation layer 20 at least partially, e. g. not over the whole length of the conductor. In embodiments, where the insulation layer is at least partially provided around the conductor, at least 60% of the surface (the outer surface) of the conductor is covered by the insulation layer, typically at least 70%, more typically at least 80%. In some embodiments, the insulation layer that is partially provided around the conductor surrounds the conductor approximately 360° over the entire length where the insulation layer is provided.

The composition is applied substantially continuously onto the conductor 15-1, 15-2, 15-3, 15-4. Preferably, also the advancement in the advancement direction A is continuous. Thereby, a continuous insulation layer 20 of relatively homogenous thickness can be obtained on the conductor 15-1, 15-2, 15-3, 15-4. Preferably, the continuous insulation layer 20 surrounds the conductor approximately 360° around a longitudinal axis of the conductor 15-1, 15-2, 15-3, 15-4. Continuously advancing is typically achieved by moving the conductor 15-1, 15-2, 15-3, 15-4 relative to the treatment device 110, 120, 130 at a substantially constant speed.

In both of the embodiments of Figs. 3, 4, and 5, a respective cleaning unit 130, 230 may be provided to be part of the treatment device. The cleaning unit includes automatic cleaning means, such as mechanical/abrasive and/or chemical cleaning means, configured to clean the outer surface(s) of any or each conductor 15-1, 15-2, 15-3, 15-4, thus preparing the application and curing of the composition. By cleaning the outer surface(s), an improved adhesion strength of the composition may be achieved, and voids or other irregularities in the insulation layer 20 of the conductor arrangement 10 may be further suppressed or eliminated. Preferably, as with the application and the curing, also the cleaning via the respective cleaning unit 130, 230 is carried out substantially continuously in the longitudinal direction of the conductor. The cleaning unit may also, in addition to cleaning, enhance the chemical reactivity of the surface of the conductor by depositing chemical functional groups on the surface of the conductor which readily react with the thermosetting material, improving the resin adhesion. The chemical functional groups may be produced by means of a plasma.

Fig. 6 shows a flow chart of a method according to an embodiment, the method preferably carried out using an apparatus 100 of Fig. 3 or an apparatus 200 of Figs. 4 and 5, as described herein.

In Fig. 6, the process is started in 1001. In 1002, a composition of a thermosetting material and solid electrically insulating elements, as described herein, is applied continuously in a longitudinal direction of the conductor 15-1, 15-2, 15-3, 15-4 forming a pool 300 of the thermosetting material for obtaining a uniform liquid 330 around the conductor 15-1, 15-2, 15-3, 15-4. In 1003, the curing process of the applied thermosetting material is activated continuously in the longitudinal direction, whereupon the insulation layer 20 is obtained on the conductor 15-1, 15-2, 15-3, 15-4. The process ends in 1004. In a further embodiment, not shown, the method may additionally comprise a cleaning of an outer surface of the conductor 15-1, 15-2, 15-3, 15-4 continuously in the longitudinal direction. The cleaning, e. g. mechanical/abrasive and/or chemical cleaning, is typically carried out prior to applying 1002 and curing 1003.

Features relating to the apparatus and/or the method are described. The conductor 15-1, 15-2, 15-3, 15-4 typically is a coil wire, a Roebel bar, a stator winding, or a combination thereof. Preferably, the conductor is enameled. For example, an enameled conductor is an enameled stator winding.

The conductor arrangement 10 obtained via the herein-described technology is intended to be used in an electrical appliance. For example, the conductor arrangement 10 is configured to be used in an electrical motor, a generator, or a transformer. Preferably, the conductor arrangement 10 is configured to be used in a stator of a rotary electric machine, such as a stator of an electrical motor or a stator of an electrical generator.

In a test arrangement, a coil comprising 11 enameled rectangular copper wires serving as the conductors 15-1, 15-2, 15-3, 15-4 were transported at a constant speed through a treatment device having an application unit and a curing unit, as described herein. The conductors 15-1, 15-2, 15-3, 15-4 were jacketed, by the application unit, with a two-component Silopren UV Electro liquid silicone rubber having mica platelets mixed therein at room temperature. A metering and mixing system supplied a constant amount of liquid silicone to the application unit. The crosslinking of the applied jacketing was subsequently activated with the curing unit, and a conductor arrangement was obtained. The conductor arrangement showed an insulation layer of substantially homogeneous thickness and virtually no voids, even in the gaps between respective adjacent ones of the conductors 15-1, 15-2, 15-3, 15-4.

The present disclosure deals with the coating or jacketing of a straight multi-strand metallic conductor with an instant curing thermoset compound to provide electrical insulation. The jacketing process is able to produce simultaneously the groundwall and the strand/turn insulations. The jacketing is performed by means of a jacketing die. The chemical affinity of the enamel finish and the thermoset resin, coupled with the pressure applied to the resin confined in the jacketing die, allow the thermosetting resin to diffuse between the individual strands to form a strand/turn insulation, while the resin applied to the outer perimeter of the multi-strand conductor serves as groundwall insulation. The method is able to perform a uniform, free-of-voids coating of irregular conductor surfaces such as those encountered in Roebel bars. The jacketing process applies an insulation which shows excellent adhesion between cured resins and strands.

Electrical conductors, such as coil wires or Roebel bars for a rotary electric machine such as a motor or a generator, have to be insulated on an outer surface thereof in order to avoid an electrical contact between single adjacent conductors, such as adjacent windings of a coil form-wound coil. The insulation also serves the purpose to avoid a short circuit between the conductor in the electric machine and other conductive components, e. g. the stator of the electric machine.

A combination of mica tape and resin impregnation has been in use for almost a century. Although robotic applications have been developed to automate the coil forming and insulation taping, performing a conductor insulation, in particular a stator coil insulation, is still a time-consuming process involving multiple steps. The mica tapes have to be precisely positioned to avoid thickness variations in the form of tape gaps or overlapping tape parts. Moreover, the principle of mica tape impregnation bears the risk of void formation in the tape resin structure.

### Voids may lead to partial discharge problems.

Moreover, handling of liquid resins, usually epoxy-anhydride and polyester resin systems, causes health and safety issues, as well as environmental issues, due to the evaporation of chemical fumes and gases from the large VPI tanks.

Curing the impregnated parts is time consuming and energy consuming. For example, it may take several hours of heating in large ovens, while the chemical fumes have to be eliminated.

The present disclosure deals with the coating or jacketing of a straight metallic conductor with an instant curing thermoset compound. The jacketing process is able to produce simultaneously the groundwall and the strand/turn insulations. The jacketing is performed by means of a jacketing die.

To perform the jacketing, the strands that will ultimately compose a conductor are fixed in a clamping system while a CNC table transports the jacketing die at a predefined speed along the length of the conductor. The thermoset resin compound is supplied at constant pressure by means of a metering pump (not shown) with the formation of a pool.

The jacketing process is able to apply a uniform layer of thermoset resin on the conductors, which is free of voids and shows excellent adhesion between the resin and the aluminum or enameled copper strands. The chemical affinity of the enamel finish and the epoxy resin, coupled with the pressure of the resin confined in the jacketing die, allow the thermosetting resin to diffuse between the individual strands. The use of a pool produces a constant pressure resulting in a uniform and homogeneous insulation layer.

The jacketing process is able to produce a uniform coating layer, where the coating thickness is a function of the jacketing speed (mm/min) and resin feeding rate (g/min). The best coating uniformity is obtained when using a gravimetric pump. The thermoset compound is an instant curing material. The curing reaction can be activated by exposure to elevated temperature, by exposure to radiation (UV, IR), or by the addition of a chemical catalyst right

before the jacketing operation. The curing reaction is to be activated preferentially immediately after the jacketing layer has been applied, and it should be fast enough to prevent contour deformation of the applied uncured viscous liquid layer due to gravitational forces (resin run off).

The thermoset resin can be compounded with solid particles to enhance a variety of properties such as thermal conductivity, breakdown strength or mechanical performance. As an example, 5% by weight of mica platelets may be added to the thermoset resin for the jacketing of copper conductors.

As a result of the exerted pressure and shearing forces during jacketing, the mica platelets are preferentially aligned in the direction parallel to the conductor's surface.

The pressure in the jacketing die is influenced by the viscosity of the thermoset resin, and by the amount of solid filler added to the compound. The pressure is substantially constant as a consequence of the pool 300. A jacketing speed may be for example 800 mm/min and a resin jacket thickness may be 2 mm. The pressure in the jacketing die can be further influenced by adjusting the amount of a reactive diluent added to the thermoset formulation.

For example, the AC breakdown strength measured in oil according to IEC 60243-1 - Part 1 (Tests at power frequencies) of a resin filled with 5% by weight of mica platelets is significantly improved compared to neat thermoset resin. Using Shell Diala S4 ZX-I as electrical insulating oil measurements of the AC breakdown strength shows that typically the addition of 5% mica results in a significant enhancement of the shape parameter of the Weibull distribution of the breakdown strength.

## Claims

1. An apparatus (100, 200) for applying an insulation layer (20) onto a conductor (15-1, 15-2, 15-3, 15-4) to obtain a conductor arrangement (10) for an electrical appliance, the apparatus comprising:
a treatment device (110, 120, 130; 210, 220, 230) having at least an application unit (110, 210) and a curing unit (120, 220), the curing unit (120, 220) being arranged downstream of the application unit (110, 210);
an advancement device (150) configured to perform a relative movement of the conductor (15-1, 15-2, 15-3, 15-4) with respect to the treatment device (110, 120, 130; 210, 220, 230) in an advancement direction (A),
wherein the application unit (110, 210) is configured to apply a composition of a thermosetting material and solid electrically insulating elements, preferably mica platelets, onto the conductor (15-1, 15-2, 15-3, 15-4) by forming a pool (300) of the composition having a substantially constant pressure that provides a homogeneous liquid composition (330) around the conductor, and
wherein the curing unit (120, 220) is configured to activate a curing process of the thermosetting material to obtain the insulation layer (20) on the conductor (15-1, 15-2, 15-3, 15-4).

2. The apparatus (100, 200) of claim 1, wherein the application unit (110, 210) is configured to apply the composition substantially continuously; and/or wherein the curing unit (120, 220) is configured to activate the curing process substantially continuously.

3. The apparatus of claim 1 or 2, wherein the treatment device (110, 120, 130; 210, 220, 230) further comprises a cleaning unit (130, 230) arranged upstream of the application unit (110, 210), the cleaning unit (130, 230) configured to clean an outer surface of the conductor (15-1, 15-2, 15-3, 15-4).

4. The apparatus (100, 200) of any one the preceding claims, wherein the application unit (110, 210) and the curing unit (120, 220) are arranged spatially adjacent to one another, preferably in a common unit, and wherein, if the cleaning unit (130, 230) is provided, also the cleaning unit (130, 230) is provided spatially adjacent to the application unit (110, 210), preferably in the common unit.

5. The apparatus (100) of any one of claims 1 to 4, wherein the advancement device (150) comprises a treatment device moving unit, preferably an automatically moving robotic unit, configured to move the treatment device along the longitudinal direction of the conductor (15-1, 15-2, 15-3, 15-4), the conductor being held fixed.

6. The apparatus (200) of any one of claims 1 to 4, wherein the advancement device comprises a conductor feeding unit configured to move the conductor (15-1, 15-2, 15-3, 15-4) in its longitudinal direction along the treatment device, the treatment device being held fixed.

7. A method for applying an insulation layer onto a conductor (15-1, 15-2, 15-3, 15-4) to obtain a conductor arrangement (10) for an electrical appliance, the method comprising:
Applying continuously in a longitudinal direction of the conductor (15-1, 15-2, 15-3, 15-4) a composition of a thermosetting material and solid electrically insulating elements, preferably mica platelets, onto the conductor by forming a pool (300) of the composition having a substantially constant pressure that provides a homogeneous liquid composition (330) around the conductor, and
activating continuously in the longitudinal direction a curing process of the applied thermosetting material to obtain the insulation layer (20) on the conductor (15-1, 15-2, 15-3, 15-4).

8. The method of claim 7, further comprising:
Cleaning continuously in the longitudinal direction an outer surface of the conductor (15-1, 15-2, 15-3, 15-4).

9. The apparatus (100, 200) of any one of claims 1-6 or the method of any one of claims 7-8, wherein the conductor (15-1, 15-2, 15-3, 15-4) comprises multiple conductor parts each having an outer surface, the multiple conductor parts being arranged adjacent to one another in a longitudinal direction whereby a gap (G) is formed between each of the adjacent ones of the outer surfaces, wherein the insulation layer is additionally obtained in the gap (G).

10. The apparatus (100, 200) of any one of claims 1-6 or 9 or the method of any one of claims 7-8 or 9, wherein the solid electrically insulating elements are mica platelets, wherein the relationship of the mica platelets to the thermosetting material component of the insulation material is between 20:80, preferably between 25:75 and typically about 30:70 by volume in the uncured state.

11. The apparatus (100, 200) of any one of claims 1-6 or 9-10 or the method of any one of claims 7-8 or 9-10, wherein the conductor (15-1, 15-2, 15-3, 15-4) is any of a coil wire, a Roebel bar, a stator winding, or a combination thereof.

12. The apparatus (100, 200) of any one of claims 1-6 or 9-11 or the method of any one of claims 7-8 or 9-11, wherein the conductor (15-1, 15-2, 15-3, 15-4) is an enameled conductor.

13. The apparatus (100, 200) of any one of claims 1-6 or 9-12 or the method of any one of claims 7-8 or 9-12, wherein the conductor arrangement (10) is configured to be used in an electrical motor, a generator, or a transformer.

14. The apparatus (100, 200) of any one of claims 1-6 or 9-13 or the method of any one of claims 7-8 or 9-13, wherein the thermosetting material is low-viscosity material.

15. An electric machine part, in particular a stator of an electric machine, having a conductor arrangement (10) obtained by means of the apparatus of any one of claims 1-6 or 9-14 or obtainable by means of the method of any one of claim 7-8 or 9-14.
